# EUROPEAN PATENT SPECIFICATION

(11) **EP 3 414 211 B1**
(45) Date of publication and mention of the grant of the patent: **07.07.2021**
(21) Application number: 17704228.0
(22) Date of filing: 08.02.2017
(51) Int. Cl.: C04B 28/14, C04B 40/00, C04B 111/00

(54) **PLASTER COMPOSITION**
GIPSMISCHUNG
COMPOSITION DE PLÂTRE

(30) Priority: 08.02.2016 EP 16290029
(43) Date of publication of application: 19.12.2018
(73) Proprietor: Etex Building Performance International SAS, 84915 Avignon (FR)
(72) Inventor: MARTIN, Daniel, 84270 Vedène (FR)
(74) Representative: Etex Services NV - Etex IPSC
(86) International application number: PCT/EP2017/052708
(87) International publication number: WO 2017/137417

(56) References cited:
- EP-B1- 1 328 485
- WO-A2-2004/083146
- CN-A- 101 322 904
- US-A- 5 238 609
- US-B2- 8 252 110

## Description

### FIELD OF THE INVENTION

Described herein are plaster compositions comprising specific foaming agent compositions, plasterboards obtained using said plaster compositions, and methods for the manufacture of said plasterboards.

### BACKGROUND OF THE INVENTION

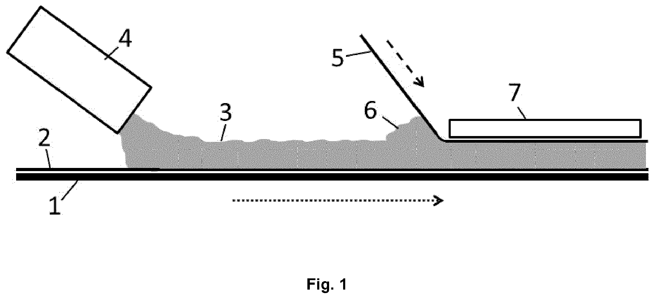

Plasterboard or drywall is a panel made of gypsum, which is typically used in the construction of walls and ceilings. Fig. 1 illustrates a part of a typical process for the manufacture of plasterboard. A bottom liner, facer, or facing sheet (2) is rolled from a lower supply roll (not shown) onto one or more forming tables (1) moving in the direction of the dotted arrow. Plaster slurry (3) is prepared in a mixer (not shown) and is subsequently deposited on the forming table (1) via one or more outlets or boots (4) of the mixer. In order to reduce the plasterboard weight, the slurry typically comprises foam, resulting in the presence of voids (bubbles) in the core. In order to obtain good quality plasterboards, the foam should have a good stability and have a sufficiently large volume. An upper facing sheet (5) is rolled from an upper supply roll (not shown) in the direction of the dashed arrow and applied to the slurry (3) as it moves to an extruder plate (7), thus shaping the slurry into a panel which is sandwiched by the facing sheets (2, 5). The plaster in the slurry is allowed to react with the water in the slurry to form gypsum (calcium sulfate dihydrate). This is known as "setting". Then, the excess water is removed via drying in a kiln (not shown).

As the extruder plate (7) forms a pinch point for the slurry, an accumulation of slurry (6) can typically be observed upstream of the extruder plate (7). This slurry accumulation is typically referred to as the "head" of the slurry. During the process, it is important to keep the height or size of the head stable. Indeed, instabilities of the head can lead to voids in the plasterboard core and/or density variations, thus leading to a plasterboard with surface defects or a plasterboard with a lack of matter in the edge or plasterboard having a reduced strength. Instabilities of the head can lead also to a facing sheet break and a decrease of the machine productivity. The stability and uniformity of the head may be improved using specific board forming devices, such as described in US patent 8,834,145. Moreover, the head of the slurry is typically monitored continuously via a monitoring system, and a number of process parameters are continuously adapted based on feedback from the monitoring system.

Nevertheless, it is preferred that adaptations to the process parameters are kept to a minimum. Accordingly, there remains a need for solutions for improving the control of the head of the slurry. The solutions should still allow for obtaining a good foam volume, foam stability, and/or plasterboard strength.

WO2004083146 describes an acoustical panel made of plaster using a foaming agent which comprises a mixture of alkyl ether sulfate and alkyl sulfate and 10 wt% of stabilizers made of amido amine type of amine oxide.

EP1328485 describes a light plasterboard composition made with a foaming agent comprising alkyl sulfate and presenting good mechanical properties.

### SUMMARY OF THE INVENTION

The present inventors have found that plaster slurries comprising a combination of with one or more amine oxides and one or more alkyl sulfate can allow for improving the stability of the head of the slurry in the production of plasterboard. Moreover, it was found that in particular embodiments, an improved foam volume (foamability) and foam stability can be obtained, and even the compressive strength of the resulting plasterboards may be improved. The plaster slurries described herein may further allow for the manufacture of plasterboards of which the surface has a better appearance (less blisters).

The present application is defined in the appended claims.

The above and other characteristics, features and advantages of the present invention will become apparent from the following detailed description which illustrates, by way of example, the principles of the invention. This description is given for the sake of example only, without limiting the scope of the invention.

### BRIEF DESCRIPTION OF THE DRAWINGS

The accompanying Figure is provided by way of example only and should not be considered to limit the scope of the present invention.

**Fig. 1** Schematic illustration of a part of a process for the manufacture of plasterboard.

### DETAILED DESCRIPTION OF THE INVENTION

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art. The following terms are provided solely to aid in the understanding of the invention.

When reference is made to weight percentage (wt%), this is to be understood, unless differently specified, as the weight of the component expressed as percentage over the total weight of the composition in which the component is present.

The term "gypsum" as used herein refers to calcium sulfate dihydrate (DH), i.e. CaSO₄·2H₂O. Gypsum which is present in plasterboards typically is obtained via the hydration of plaster.

The term "plaster" or "stucco" as used herein and in the generally accepted terminology of the art, refers to a partially dehydrated gypsum of the formula CaSO₄·xH₂O, where x can range from 0 to 0.6. The term "plaster" is also referred to herein as "hydratable calcium sulfate". The term "dry weight" when referred to plaster in a plaster composition, refers to the weight of the calcium sulfate including hydration water (i.e. the xH₂O of the above formula), but excluding any gauging water in the composition. Plaster can be obtained via the calcination of gypsum, i.e. the thermal treatment of gypsum in order to remove (a part of) the combined water. For the preparation of plaster, natural or synthetic gypsum may be used. Natural gypsum may be obtained from gypsum rock or gypsum sand. Synthetic gypsum typically originates from flue gas desulfurization (FGD) or phosphoric acid production.

Plaster wherein x is 0.5 is known as "calcium sulfate hemihydrate" (HH) or "calcium sulfate semihydrate" (SH), i.e. CaSO₄·0.5H₂O. Calcium sulfate HH can occur in different crystalline forms; known as α and β. Calcium sulfate HH is also known as "gypsum plaster" or "plaster of Paris".

Plaster wherein x is 0 is known as "calcium sulfate anhydrite" or "anhydrous calcium sulfate". "Calcium sulfate anhydrite III" (AIII) refers to a dehydrated HH with the potential of reversibly absorbing water or vapor. "Calcium sulfate anhydrite II" (All) refers to the completely dehydrated calcium sulfate (CaSO₄). All is formed at higher temperatures and is preferably not used for the preparation of plasterboard.

The terms "plasterboard" and "gypsum board" as used herein interchangeably and refer to a panel or board comprising a gypsum core, obtainable from a plaster slurry as described herein.

Accordingly, the term "plasterboard" refers to a board or panel which is obtainable via the setting (hydration) of plaster. The term "board" or "panel" as used herein refers to any type of wall, ceiling or floor component of any required size.

The term "alkyl" by itself or as part of another substituent, refers to a linear or branched saturated hydrocarbon group joined by single carbon-carbon bonds.
When a subscript is used herein following a carbon atom, the subscript refers to the number of carbon atoms that the named group may contain. Thus, for example, C₁₋₄alkyl means an alkyl of one to four carbon atoms. Examples of C₁₋₄alkyl groups are methyl, ethyl, propyl, isopropyl, butyl, isobutyl and tert-butyl.
The term "aryl", by itself or as part of another substituent, refers to a polyunsaturated, aromatic hydrocarbyl group having a single ring (i.e. phenyl) or multiple aromatic rings fused together (e.g. naphthalene), or linked covalently; wherein at least one ring is aromatic. Typical aryl groups may contain 6 to 14 carbon atoms and are referred to as "C₆₋₁₄aryl". Aryl rings may be unsubstituted or substituted with from 1 to 4 substituents on the ring. Aryl may be substituted with halo, cyano, nitro, hydroxy, carboxy, amino, acylamino, alkyl, heteroalkyl, haloalkyl, phenyl, aryloxy, alkoxy, heteroalkyloxy, carbamyl, haloalkyl, methylenedioxy, heteroaryloxy, or any combination thereof. Examples of C₆₋₁₀aryl include phenyl, naphthyl, indanyl, or 1,2,3,4-tetrahydro-naphthyl.
The term "arylene" by itself or as part of another substituent, refers to aryl groups that are divalent, i.e., with two single bonds for attachment to two other groups. For example, the term "C₁₋₆alkylC₆₋₁₀arylene", by itself or as part of another substituent, refers to a C₆₋₁₀aryl group as defined herein, wherein a hydrogen atom is replaced by a C₁₋₆alkyl as defined herein.
The term "aqueous" as used herein means that more than 50 wt% of the solvent of a solution is water, preferably more than 90 wt% of the solvent is water. The remainder of the solvent may be selected from alcohols or other solvents. Most preferably, the term "aqueous" means that the solvent is water.
The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Provided herein are plaster compositions suitable for the preparation of plasterboards. The plaster compositions provided herein are characterized in that they comprise a specific foaming agent composition, which was found to improve the stability of the head of the slurry in the production of plasterboard. In particular embodiments, the foaming agent compositions may provide improved foam properties such as foam volume and foam stability. Moreover, the plaster compositions described herein may allow for an improved compressive strength of the resulting plasterboard.
More particularly, provided herein is a plaster composition comprising plaster, water, and a foaming agent composition; wherein the foaming agent composition comprises one or more foaming agents (also referred to herein as "surfactants") selected from the list consisting of alkyl sulfate; and one or more amine oxides. This will be explained further below.
The plaster composition or slurry described herein comprises plaster, (gauging) water, and a foaming agent composition as described above. The plaster composition typically is a plaster slurry.

The plaster composition described herein comprises plaster and water as its main components. Typically, the sum of plaster and water forms at least 90 wt% of the plaster composition, preferably at least 95 wt%, or even at least 98 wt%.
In preferred embodiments, the plaster composition will have a water/plaster ratio between 0.50 and 1.00. The water/plaster ratio refers to the weight of (free) water in the plaster composition divided by the dry weight of plaster in the plaster composition. With "free water" is meant all water which is not part of the hydrate, which typically corresponds to the gauging water. In preferred embodiments, the plaster composition described herein has a water/plaster ratio below 0.80. In further embodiments, the plaster composition has a water/plaster ratio below 0.75, below 0.70, below 0.65, or even below 0.60. When a low water/plaster ratio is desired, the plaster composition will typically comprise a fluidizer, as is known in the art.
The plaster contained in the plaster composition is a hydratable calcium sulfate, such as calcium sulfate hemihydrate. Preferably, the plaster contains at least 70 wt% calcium sulfate hemihydrate, or even at least 85 wt% calcium sulfate hemihydrate. The calcium sulfate hemihydrate may be in its α or β form, and preferably in the β form. The plaster is typically provided in powder form, as is known in the art.

In addition to the water and plaster, the plaster composition described herein further comprises a foaming agent composition as described above. Accordingly, the plaster composition described herein comprises a mixture of plaster; water; one or more amine oxides; and one or more foaming agents selected from the list consisting of alkyl sulfate. Such foaming agents are used as surfactants in various technologies, and methods for the preparation of such foaming agents are well known.

Suitable cations which bind to the sulfonic groups are known in the art and include, but are not limited to, Na⁺, Mg²⁺, K⁺, ammonium, and organic derivatives of ammonium such as monoethanolamine, diethanolamine, and triethanolamine. These cations are generally capable of generating foaming agents having an adequate water solubility. The skilled person will understand that bivalent cations such as Mg²⁺ will be associated with two sulfonic groups. In particular embodiments, ammonium (NH₄⁺), Na⁺, or a mixture thereof is used.

The foaming agent is used for the manufacture of a foamed plaster composition, i.e. a plaster composition comprising (air) bubbles, as is known in the art. Accordingly, the plaster composition described herein is typically foamed.

The alkyl sulfate is a compound of Formula (I): 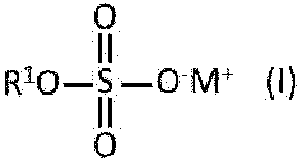
wherein M⁺ is a cation and
R¹ is a linear C₈₋₁₂alkyl.

Preferred cations M⁺ include, but are not limited to: Na⁺; K⁺; ammonium, organic derivatives of ammonium such as monoethanolamine, diethanolamine, and triethanolamine. Particularly preferred cations are Na⁺ and ammonium.
In particular embodiments, the foaming agent composition may comprise a plurality of compounds of Formula (I), having different R¹ and/or M⁺.
Advantageously, the foaming agents of the foaming agent composition may comprise a mixture of n-octyl sulfate, n-decyl sulfate, and n-dodecyl sulfate. Combinations of these foaming agents can further improve the compressive strength of the resulting plasterboard. In particular embodiments, the one or more foaming agents comprise a mixture of sodium n-octyl sulfate, sodium n-decyl sulfate, and sodium n-dodecyl sulfate.

In particular embodiments, the plaster composition may comprise one or more other foaming agents other than an alkyl sulfate. In the present description, these other foaming agents (if present) will not be considered part of the foaming agent composition; in particular when referring to concentrations of foaming agents and amine oxides in the foaming agent composition. If present, the other foaming agents preferably are present in an amount less than 10 wt%, and preferably less than 5 wt%, with respect to the total amount of alkyl sulfates present in the plaster composition.
In other embodiments, the plaster composition does not comprise any other foaming agents than the foaming agents of the foaming agent composition. For example, the plaster composition may be essentially free of alkylethercarboxylates, ethoxylated alkylphenols, alkylpolysaccharides, and alkylsulfosuccinates. In particular embodiments, the plaster composition may further be essentially free of alkyl sulfonates, alkylether sulfonates, or alkylarylene sulfonates. In particular embodiments, the total amount of foaming agents selected from the group consisting of alkylethercarboxylates, ethoxylated alkylphenols, alkylpolysaccharides, alkylsulfosuccinates, alkyl sulfonates, alkylether sulfonates, and alkylarylene sulfonates; forms less than 0.1 wt% of the plaster composition.
In preferred embodiments, the one or more foaming agents comprise one or more alkyl sulfates. The present inventors found that the combination of alkyl sulfates with amine oxides provided particularly good results. In further embodiments, the foaming agent composition comprises one or more alkyl sulfates and is (essentially) free from alkylether sulfates. In particular embodiments, the foaming agents of the foaming agent composition contain at least 95 wt% alkyl sulfates, at least 97 wt% alkyl sulfates, or even at least 99 wt% alkyl sulfates.A class of particularly suitable alkylsulfate based foaming agents is described in European patent application EP1328485.

In particular embodiments, the foaming agents consist of one or more sulfates selected from the list consisting of n-octylsulfate (e.g. sodium n-octylsulfate), n-decylsulfate (e.g. sodium n-decylsulfate), and n-dodecylsulfate (e.g. sodium n-dodecylsulfate). In preferred embodiments, the foaming agents comprise 0-30 wt% n-octylsulfate, 50-75 wt% n-decylsulfate, and 10-50 wt% n-dodecylsulfate. In specific embodiments, the foaming agents comprise 0-15 wt% *n-*octylsulfate, 55-75 wt% n-decylsulfate, and 18-37 wt% n-dodecylsulfate.
In particular embodiments, the foaming agents of the foaming agent composition comprise a mixture of sodium alkylsulfates and ammonium alkylsulfates.

The amount of foaming agent composition added to the plaster composition may depend on the specific type and relative amounts of foaming agent compounds and amine oxides used, and the desired density of the plasterboard to be produced. Typically, an amount ranging from 0.005 wt% to 0.1 wt% (relative to the dry plaster weight) is used. In particular embodiments, the plaster composition may comprise the foaming agent composition in an amount ranging from 0.01 wt% to 0.1 wt% (relative to the dry plaster weight). In particular embodiments, the plaster composition may comprise the foaming agent composition in an amount ranging from 0.02 wt% to 0.05 wt% (relative to the dry plaster weight).

The foaming agent composition in the plaster composition described herein comprises one or more amine oxides. The present inventors surprisingly found that the combination of one or more amine oxides with one or more foaming agents as described above can significantly improve the stability of the head of the slurry during the manufacture of plasterboards; Moreover, this combination may improve the foam volume and foam stability, and can even improve the compressive strength of plasterboard.

The one or more amine oxides are compounds of Formula (III): 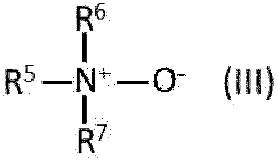 wherein R⁵ is C₆₋₁₆alkyl; and R⁶ and R⁷ are independently C₁₋₃alkyl or hydrogen. In preferred embodiments, R⁶ and R⁷ are C₁₋₃alkyl. Most preferably, R⁶ and R⁷ are methyl.

In specific embodiments, the one or more amine oxides are selected from the list consisting of octyldimethylamine oxide, decyldimethylamine oxide, and dodecyldimethylamine oxide. Preferably, the one or more amine oxides contain alkyl groups R⁵ have a similar length as the alkyl, groups of the one or more alkyl sulfates in the foaming agent composition.
In particular embodiments, the foaming agent composition comprises:
- one or more foaming agents selected from the list consisting of octylsulfate, decylsulfate, and dodecylsulfate; and
- one or more amine oxides selected from the list consisting of and octyldimethylamine oxide, decyldimethylamine oxide, and dodecyldimethylamine oxide.

The foaming agent composition of the plaster composition described herein typically comprises the one or more foaming agents as the main component(s) and the one or more amine oxides as minority component(s).
The foaming agent composition comprises between 95 wt% and 99 wt% of the one or more foaming agents; and between 1.0 wt% and 5.0 wt% of the one or more amine oxides. The present inventors have found that when used in these ratios, the combination of amine oxides and foaming agents can provide an improved stability of the head of the slurry, while still providing a good foamability and foam stability, and still allowing for obtaining an excellent compressive strength of the final plasterboard. It was further found that in these ratios, a good bond between the gypsum core and the facer could be obtained.

In yet further embodiments, the foaming agent composition comprises:
- between 95 wt% and 99 wt% of one or more foaming agents selected from the list consisting of octylsulfate, decylsulfate, and dodecylsulfate; and
- between 1.0 wt% and 5.0 wt% one or more amine oxides selected from the list consisting of and octyldimethylamine oxide, decyldimethylamine oxide, and dodecyldimethylamine oxide.

The plaster composition described herein may further comprise one or more additives such as fluidizers, pigments, fillers, accelerators, retardants, and starches. The use of such additives is well known in the art and will not be discussed further herein.

Further provided herein is the use of a plaster composition as described above, for the manufacture of plasterboard; and a related method for the manufacture of a plasterboard. More particularly, provided herein is a method for the manufacture of a plasterboard, using a plaster composition as described above. Methods for the manufacture of a plasterboard based on a given plaster composition or slurry are well known in the art. More particularly, the method described herein may comprise:
(a) providing a plaster composition as described herein,
(b) forming said plaster composition into a panel; and
(c) allowing said panel to set.

In step (a), a plaster composition as described above is provided. The plaster composition may be prepared by mixing plaster with water and foaming agent composition, and optionally one or more additives, in a mixer (or in multiple stages in different mixers) as is known in the art. Typically, plaster will be mixed with gauging water to prepare a slurry. Then, the slurry is mixed with foam, which is prepared in a foam generator after mixing the foaming agent(s) and amine oxide(s) with water. Various additives such as fluidizers may be added directly to the gauging water, or to the slurry before addition of the foam, may be present in the foam, or may be added to the slurry after the addition of foam.

The foaming agent composition is prepared by mixing the foaming agent(s) with the amine oxide(s). Typically, the foaming agent composition will be prepared by mixing one or more (aqueous) foaming agent solutions with one or more (aqueous) amine oxides. The present inventors have found that mixing amine oxides and foaming agents as described herein at high concentrations can be difficult at an industrial scale. This can be avoided by sufficiently diluting at least one of the foaming agents and amine oxides before mixing. Preferably, the amine oxide(s) are added to a sufficiently dilute solution of foaming agents. In particular embodiments, the amine oxide(s) are added to a dilution comprising 0.05 wt% to 1.0 wt% of foaming agent(s).

Thus, in particular embodiments, step (a) of the method of manufacturing a plasterboard provided herein may comprise:
(a1) mixing the one or more foaming agents with the one or more amine oxides, wherein said foaming agents and/or said oxides are provided as a dilute aqueous solution prior to mixing, thereby obtaining a foaming solution;
(a2) preparing foam from said foaming solution; and
(a3) mixing said foam with a plaster slurry.

In step (b) the plaster composition is formed into a panel. This can be done using known methods. Typically, the plaster composition is deposited between two facers or liners, i.e. sheets of covering material. Then, the slurry is formed or pressed into a panel. Preferably, the facers comprise or are made of paper or cardboard. However, also facers comprising a non-woven fabric comprising mineral, glass, or polymer fibers may be used.
The panel produced in step (b) is of indefinite length, and will be cut to the required size.

In step (c), the panel obtained in step (b) is allowed to set. More particularly, the plaster composition in the panel is allowed to set. This is well known in the art. Typically, the method described herein will also comprise the step of drying the panel. Drying is typically performed after setting of the panel, at an elevated temperature. Typically, the panel is dried in an oven at a temperature between 100°C and 250°C.

Further provided herein is a plasterboard obtained by or obtainable by setting of a plaster composition as described above. More particularly, the plasterboard may be obtained by the method for the manufacture as described above.
The plasterboard will typically comprise a gypsum core obtained via the setting of a plaster composition as described above, wherein at least one side of the core is provided with a facer or liner. Preferably, both sides of the core are provided with a facer. The facers of the opposing sides of the gypsum board may be identical or not. Preferably, the one or more facers comprise or are made of paper or cardboard. However, also facers comprising a non-woven fabric comprising mineral, glass, or polymer fibers may be used.
The gypsum core of the plasterboard is obtained or obtainable by setting of a plaster composition as described above, and therefore comprises a foaming agent composition as described aboveTypically, the plasterboard, and more particularly the plasterboard core, may comprise between 0.005 wt% to 0.5 wt% of the foaming agent composition. In particular embodiments, the plasterboard, and more particularly the plasterboard core, may comprise between 0.01 wt% to 0.5 wt% of the foaming agent composition. In particular embodiments, the plasterboard, and more particularly the plasterboard core, may comprise between 0.015 wt% to 0.25 wt% of the foaming agent composition. In specific embodiments, the foaming agent composition present in the plasterboard comprises between 95 wt% and 99 wt% of one or more alkyl sulfates; and between 1.0 wt% and 5.0 wt% of one or more amine oxides of Formula (III), wherein R⁵, R⁶, and R⁷ are as defined above

The plasterboard provided herein typically is a light-weight plasterboard. As described above, such densities can be obtained by manufacturing the plasterboard from a foamed gypsum slurry. In particular embodiments, the gypsum core of the plasterboard may have a density below 1000 g/cm³, preferably below 850 g/cm³. In particular embodiments, the gypsum core may have a density between 450 kg/m³ and 800 kg/m³.
Typical plasterboards have a thickness of about 12.5 mm. However, the present plasterboards are not limited to such thickness. In certain embodiments the plasterboard thickness may range from 5 mm to 50 mm.
The use of foaming agent compositions as described herein allows for the preparation of light-weight plasterboards having a relatively high compressive strength. In particular embodiments, the core of the plasterboard provided herein has a compressive strength of at least 2.2 MPa. The compressive strength of plasterboards can be measured according to the ASTM C473-12 standard.

Further provided herein is a foaming agent composition for use in a plaster composition as defined in claim 9. In yet further embodiments, the foaming agent composition comprises:
- between 95 wt% and 99 wt% of one or more foaming agents selected from the list consisting of octylsulfate, decylsulfate, and dodecylsulfate; and
- between 1.0 wt% and 5.0 wt% one or more amine oxides selected from the list consisting of octyldimethylamine oxide, decyldimethylamine oxide, and dodecyldimethylamine oxide.

The foaming agent composition may be provided as such, or dissolved in an appropriate solvent such as water. Accordingly, further provided herein is an aqueous solution of a foaming agent composition as described herein. The skilled person understands that the concentrations of foaming agents and amine oxides referred to herein refer to the amount of these compounds in the foaming agent composition when excluding solvents.

Further provided herein is the use of a foaming agent composition as defined in claim10 for controlling and/or stabilizing the head of a slurry in the manufacture of plasterboard. As mentioned above, the head of the slurry is an accumulation of slurry prior to a pinch point, in particular formed by one or more extrusion plates (7) as shown in Fig. 1. The stabilization of the head of the slurry involves stabilizing the height of the head of the slurry, i.e. reducing the amount and/or size of the fluctuations of the height.
The use provided herein involves adding the foaming agent composition to the slurry, as described above, preferably in an amount of 0.005 wt% to 0.1 wt% relative to the dry plaster weight of the slurry.

### EXAMPLES

The following examples are provided for the purpose of illustrating the present invention and by no means are meant and in no way should be interpreted to limit the scope of the present invention.

### A. Foamability

The "foamability", i.e. the volume of foam produced, and the foam stability were tested for a number of combinations of foaming agent and co-surfactant. Specifically, a number of foaming solutions were prepared containing various amounts of foaming agent and co-surfactant. The following foaming agents were tested:
- **FA1**: mixture of linear sodium octyl sulfate, sodium decyl sulfate, and sodium dodecyl sulfate as described in EP1328485.
- **FA2**: sodium *n*-decyl sulfate (Empicol® 0758, available from Huntsman)
- **FA3**: alkyl ether sulfate (Millifoam® H, available from Huntsman)
- **FA4**: STEOL ® DES32-IS (alkyl ether sulfate based surfactant, available from Stepan)

Each of the foaming agents was mixed with 5 wt%, 10 wt%, and 20 wt% (relative to the weight of foaming agent) of the following co-surfactants:
- **CS1**: lauramine oxide (dodecyldimethylamine oxide), available under the trade name Empigen® OB (Huntsman Performance Products)
- **CS2**: C8-10alkyl polyglucoside available under the trade name Glucopon 215® (comparative example)

For each mixture, foamability (foam volume) and foam stability were measured after one minute of foam generation with an Ultra Turrax system at 8200 rpm.

It was found that only CS1 was able to significantly increase the foamability of the foaming agents. Moreover, even low amounts of CS1 were found to be sufficient. The results of the mixtures of foaming agent + CS1 are summarized in Table 1.

**Table 1 - Effect of CS1 (lauramine oxide) on the foamability**

| **Foaming agent** | **% CS1*** | **Foam volume (mL)** | **Foam volume increase (%)** | **Half-life (s)** | **Half-life increase (%)** |
|---|---|---|---|---|---|
| **FA1** | 0 | 560 | 0 | 371 | 0 |
| **FA1** | 5 | 582 | 4 | 400 | 8 |
| **FA1** | 10 | 582 | 4 | 426 | 15 |
| **FA1** | 20 | 571 | 2 | 475 | 28 |
| **FA2** | 0 | 530 | 0 | 347 | 0 |
| **FA2** | 5 | 562 | 6 | 371 | 7 |
| **FA2** | 10 | 599 | 13 | 412 | 11 |
| **FA2** | 20 | 588 | 11 | 504 | 36 |
| **FA3** | 0 | 580 | 0 | 416 | 0 |
| **FA3** | 5 | 590 | 1.7 | 404 | -3 |
| **FA3** | 10 | 590 | 1.7 | 420 | 1 |
| **FA3** | 20 | 600 | 3.4 | 416 | 0 |

| | | | | | |
|---|---|---|---|---|---|
| * wt% relative to the total amount of foaming agent and co-surfactant | | | | | |

The results show that the addition of CS1 is most effective with foaming agents providing a lower initial foam volume (i.e. without CS1). No significant increase of the foam volume was observed with CS2.

Also the foam stability was tested, by measuring the foam half-life, i.e. the amount of time it takes to recover one half of the original volume of liquid from a measured volume of foam. The results are summarized in Table 1. CS1 was found to provide the highest foam stability improvement, in particular for FA1 and FA2. No significant improvement was observed for FA3. CS2 was found to provide a very limited increase in foam stability.

### B. Plasterboard

Preliminary tests showed that the addition of 1-5 wt% (with respect to the total amount of foaming agent + co-surfactant) of amine oxides to FA1 provides an improved volume and stability of the foam when used in plaster slurry. Although the addition of such low amounts of amine oxides was found to lower the compressive strength, this loss of compressive strength remains acceptable. Above 10 wt% of amine oxides, the advantage of the increase of foamability and foam stability was generally considered barely outweighing the loss of compressive strength.

Based on the preliminary tests, plant trials were performed for the manufacture of plasterboard, using FA1 as foaming agent and CS3 (lauramine oxide available from Solvay under the trade name Mackamine®) as co-surfactant. Also plasterboard with FA4 (without co-surfactant) was produced as a reference. Various concentrations of amine oxides were used (1 wt%, 3 wt%, and 5 wt%; with respect to the total amount of foaming agent + amine oxide).

In the plant trials, an significant improvement of the head stability was observed immediately upon the use of foam comprising amine oxides, even at low amounts.

**Table 2 - Boards prepared in plant test**

| **Foaming agent** | **% CS3*** | **Dry Weight (kg/m²)** | **Compression (MPa)** |
|---|---|---|---|
| **FA4** | 0 | 9.00 | 2.51 |
| **FA1** | 0 | 9.00 | 3.83 |
| **FA1** | 1 | 9.00 | 3.41 |
| **FA1** | 1 | 8.70 | 2.51 |
| **FA1** | 3 | 9.00 | 3.38 |
| **FA1** | 5 | 9.00 | 3.25 |

The produced plasterboards had a thickness of 12.5 mm and a weight ranging from 8.7 to 9 kg/m². The compressive strength of the boards was measured according to ASTM C473-12. A summary of the board composition and parameters is provided in Table 2. The results show that, with similar dry weight of the boards, the use of FA1 + CS3 as foaming agent composition provides a much higher compressive strength compared to the use of FA4, although the compressive strength is lower compared to the use of FA1 only. It was further observed that even with a reduced dry weight (8.7 kg/m²), the use of FA1 + CS3 allows for reducing the dry weight of the boards, while maintaining the same compression strength of heavier boards (9.0 kg/m²) comprising only FA4.

In a further test, the present inventors surprisingly found that the stability of the head of the slurry also improved when adding CS3 to FA4, even though this did not yield an increased foam volume. Moreover, in contrast with the combination of alkylsulfate + amine oxide, the combination of alkylether sulfate + amine oxide did not result in a significant decrease of the compressive strength.

The above results show that the addition of amine oxides to alkyl sulfate and alkylether sulfate foaming compounds improves the stability of the head of the slurry during the manufacture of plasterboard; while keeping an excellent compressive strength for the resulting plasterboard. It is further noted that, although the use of FA1 typically increases the risk of blisters on the plasterboard surface, no blisters were observed on the plasterboards produced using FA1 + amine oxide.

## Claims

1. A plaster composition for the preparation of a plasterboard, comprising:
- plaster;
- water; and
- a foaming agent composition comprising
- 95 wt% to 99 wt% of one or more foaming agents selected from the list consisting of alkyl sulfate; and
- 1 wt% to5 wt% of one or more amine oxides.
wherein alkyl sulfates are of formula (I): 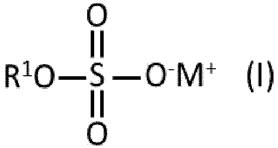
wherein R¹ is linear C8-12 alkyl; and
M⁺ is a monovalent cation.
and wherein
said one or more amine oxides are of formula (III): 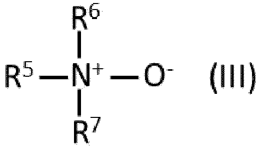
wherein R⁵ is C₆₋₁₆ alkyl; and
R⁶ and R⁷ are independently C₁₋₃ alkyl or hydrogen.

2. The plaster composition according to claim 1, wherein said one or more foaming agents comprise a mixture of sodium octyl sulfate, sodium decyl sulfate, and sodium dodecyl sulfate.

3. The plaster composition according to claim 2, wherein said one or more amine oxides are selected from the list consisting of octyldimethylamine oxide, decyldimethylamine oxide, and dodecyldimethylamine oxide.

4. The plaster composition according to any one of claims 1 to 3, comprising said foaming agent composition in an amount ranging from 0.005 wt% to 0.1 wt%, relative to the dry plaster weight.

5. A plasterboard comprising a gypsum core obtainable by setting of a plaster composition according to any one of claims 1 to 4.

6. The plasterboard according to claim5, wherein said gypsum core has a density between 450 kg/m³ and 800 kg/m³.

7. The plasterboard according to claim 5or 6, wherein the gypsum core of said plasterboard has a compressive strength of at least 2.2 MPa.

8. A method for the manufacture of a plasterboard, comprising:
(a) providing a plaster composition according to any one of claims 1 to 4,
(b) forming said plaster composition into a panel; and
(c) allowing said panel to set.
wherein step (a) comprises:
(a1) mixing said one or more foaming agents with said one or more amine oxides, wherein said foaming agents and/or said oxides are provided as a dilute aqueous solution prior to mixing, thereby obtaining a foaming solution;
(a2) preparing foam from said foaming solution; and
(a3) mixing said foam with a plaster slurry.

9. A foaming agent composition consisting:
- between 95 wt% and 99 wt% of one or more foaming agents selected from the list consisting of alkyl sulfate;
wherein alkyl sulfates are of formula (I): 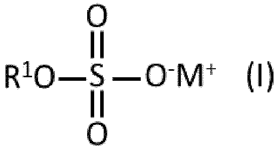
wherein R¹ is linear C8-12 alkyl; and
M⁺ is a monovalent cation.
and
- between 1.0 wt% and 5.0 wt% of one or more amine oxides said one or more amine oxides are of formula (III): 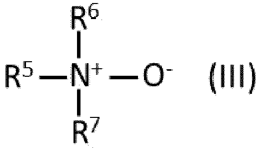
wherein R⁵ is C₆₋₁₆ alkyl; and
R⁶ and R⁷ are independently C₁₋₃ alkyl or hydrogen.

10. The use of a foaming agent composition consisting:
- 95 wt% to 99 wt% of one or more foaming agents selected from the list consisting of alkyl sulfate
wherein alkyl sulfates are of formula (I): 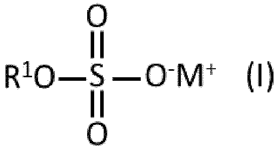
wherein R¹ is linear C8-12 alkyl;; and
M⁺ is a monovalent cation.
; and
- 1 wt% to 5 wt% one or more amine oxides, said one or more amine oxides are of formula (III): 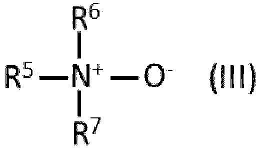
wherein R⁵ is C₆₋₁₆ alkyl; and
R⁶ and R⁷ are independently C₁₋₃ alkyl or hydrogen.
for stabilizing the head of a slurry in the manufacture of plasterboard.

## Patentansprüche

1. Gipszusammensetzung zur Herstellung eines Gipskartons, umfassend:
- Gips;
- Wasser; und
- eine Schäumungsmittelzusammensetzung, umfassend
- 95 Gew.-% bis 99 Gew.-% eines oder mehrerer Schäumungsmittel, ausgewählt aus der Liste bestehend aus Alkylsulfat; und
- 1 Gew.-% bis 5 Gew.-% eines oder mehrerer Aminoxide.
wobei die Alkylsulfate die Formel (I) aufweisen: 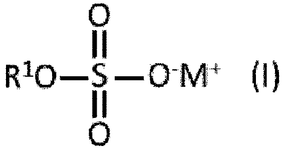
wobei R¹ lineares C8-12-Alkyl ist; und
M⁺ ein einwertiges Kation ist.
und wobei
das eine oder die mehreren Aminoxide die Formel (III) aufweisen: 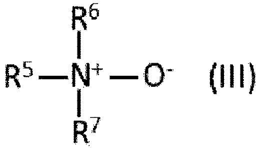
wobei R⁵ C₆₋₁₆-Alkyl ist; und
R⁶ und R⁷ unabhängig C₁₋₃-Alkyl oder Wasserstoff sind.

2. Gipszusammensetzung nach Anspruch 1, wobei das eine oder die mehreren Schäumungsmittel eine Mischung aus Natriumoctylsulfat, Natriumdecylsulfat und Natriumdodecylsulfat umfassen.

3. Gipszusammensetzung nach Anspruch 2, wobei das eine oder die mehreren Aminoxide ausgewählt sind aus der Liste, bestehend aus Octyldimethylaminoxid, Decyldimethylaminoxid und Dodecyldimethylaminoxid.

4. Gipszusammensetzung nach einem der Ansprüche 1 bis 3, umfassend die Schäumungsmittelzusammensetzung in einer Menge im Bereich von 0,005 Gew.-% bis 0,1 Gew.-%, bezogen auf das Trockengipsgewicht.

5. Gipskartonplatte, umfassend einen Gipskern, der durch Abbinden einer Gipszusammensetzung gemäß einem der Ansprüche 1 bis 4 erhalten werden kann.

6. Gipskartonplatte nach Anspruch 5, wobei der Gipskern eine Dichte zwischen 450 kg/m³ und 800 kg/m³ aufweist.

7. Gipskartonplatte nach Anspruch 5 oder 6, wobei der Gipskern der Gipskartonplatte eine Druckfestigkeit von mindestens 2,2 MPa aufweist.

8. Verfahren zur Herstellung eines Gipskartons, umfassend:
(a) Bereitstellen einer Gipszusammensetzung nach einem der Ansprüche 1 bis 4,
(b) Formen der Gipszusammensetzung zu einer Platte; und
(c) Abbindenlassen der Platte.
wobei Schritt (a) Folgendes umfasst:
(a1) Mischen des einen oder der mehreren Schäumungsmittel mit dem einen oder den mehreren Aminoxiden, wobei die Schäumungsmittel und/oder die Oxide vor dem Mischen als verdünnte wässrige Lösung bereitgestellt werden, wodurch eine schäumende Lösung erhalten wird;
(a2) Herstellen von Schaum aus der schäumenden Lösung; und
(a3) Mischen des Schaums mit einer Gipsaufschlämmung.

9. Schäumungsmittelzusammensetzung, bestehend:
- zwischen 95 Gew.-% und 99 Gew.-% eines oder mehrerer Schäumungsmittel, ausgewählt aus der Liste bestehend aus Alkylsulfat;
wobei die Alkylsulfate die Formel (I) aufweisen: 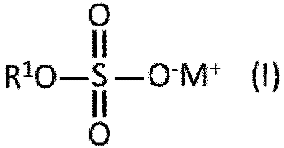
wobei R¹ lineares C8-12-Alkyl ist; und
M⁺ ein einwertiges Kation ist;
und
- zwischen 1,0 Gew.-% und 5,0 Gew.-% eines oder mehrerer Aminoxide, wobei das eine oder die mehreren Aminoxide die Formel (III) aufweisen: 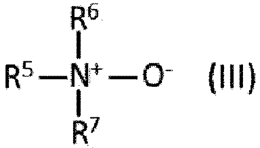
wobei R⁵ C₆₋₁₆-Alkyl ist; und
R⁶ und R⁷ unabhängig C₁₋₃-Alkyl oder Wasserstoff sind.

10. Verwendung einer Schäumungsmittelzusammensetzung, bestehend aus:
- 95 Gew.-% bis 99 Gew.-% eines oder mehrerer Schäumungsmittel, ausgewählt aus der Liste bestehend aus Alkylsulfat
wobei die Alkylsulfate die Formel (I) aufweisen: 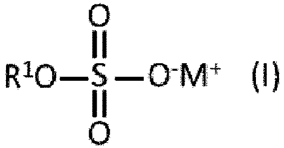
wobei R¹ lineares C8-12-Alkyl ist;; und
M⁺ ein einwertiges Kation ist.
; und
- 1 Gew.-% bis 5 Gew.-% ein oder mehrere Aminoxide, wobei das eine oder die mehreren Aminoxide die Formel (III) aufweisen: 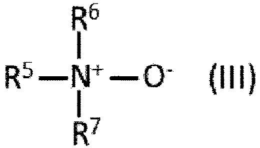
wobei R⁵ C₆₋₁₆-Alkyl ist; und
R⁶ und R⁷ unabhängig C₁₋₃-Alkyl oder Wasserstoff sind.
;
zum Stabilisieren der Schaumkrone einer Aufschlämmung bei der Herstellung von Gipskartonplatten.

## Revendications

1. Composition de plâtre pour la préparation d'une plaque de plâtre, comprenant :
- du plâtre ;
- de l'eau ; et
- une composition d'agent moussant comprenant
- 95 % en poids à 99 % en poids d'un ou plusieurs agents moussants choisis parmi la liste constituée de sulfate d'alkyle ; et
- 1 % en poids à 5 % en poids d'un ou plusieurs oxydes d'amine.
dans laquelle les sulfates d'alkyle sont de formule (I) : 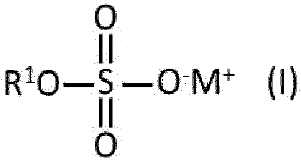
dans laquelle R¹ est un alkyle linéaire en C8 à 12 ; et
M⁺ est un cation monovalent
et dans laquelle
ledit ou lesdits oxydes d'amine sont de formule (III) : 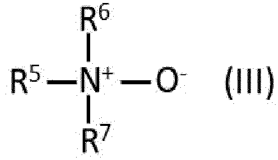
dans laquelle R⁵ est un alkyle en C_{6 à 16} ; et
R⁶ et R⁷ sont indépendamment alkyle en C_{1 à 3} ou hydrogène.

2. Composition de plâtre selon la revendication 1, dans laquelle ledit ou lesdits agents moussants comprennent un mélange d'octylsulfate de sodium, de décylsulfate de sodium, et de dodécylsulfate de sodium.

3. Composition de plâtre selon la revendication 2, dans laquelle ledit ou lesdits oxydes d'amine sont choisis parmi la liste constituée d'oxyde d'octyldiméthylamine, oxyde de décyldiméthylamine, et oxyde de dodécyldiméthylamine.

4. Composition de plâtre selon l'une quelconque des revendications 1 à 3, comprenant ladite composition d'agent moussant en une quantité allant de 0,005 % en poids à 0,1 % en poids, par rapport au poids de plâtre sec.

5. Plaque de plâtre comprenant un cœur de gypse pouvant être obtenu par la prise d'une composition de plâtre selon l'une quelconque des revendications 1 à 4.

6. Plaque de plâtre selon la revendication 5, dans laquelle ledit cœur de gypse a une masse volumique entre 450 kg/m³ et 800 kg/m³.

7. Plaque de plâtre selon la revendication 5 ou 6, dans laquelle le cœur de gypse de ladite plaque de plâtre a une résistance en compression d'au moins 2,2 MPa.

8. Procédé de fabrication d'une plaque de plâtre, comprenant :
(a) la fourniture d'une composition de plâtre selon l'une quelconque des revendications 1 à 4,
(b) la formation de ladite composition de plâtre en un panneau ; et
(c) le fait de permettre audit panneau de solidifier
dans lequel l'étape (a) comprend :
(a1) le mélange dudit ou desdits agents moussants avec ledit ou lesdits oxydes d'amine, dans lequel lesdits agents moussants et/ou lesdits oxydes sont fournis en tant que solution aqueuse diluée avant mélange, ce qui permet d'obtenir une solution moussante ;
(a2) la préparation de mousse à partir de ladite solution moussante ; et
(a3) le mélange de ladite mousse avec une bouillie de plâtre.

9. Composition d'agent moussant consistant en :
- entre 95 % en poids et 99 % en poids d'un ou plusieurs agents moussants choisis parmi la liste constituée de sulfate d'alkyle ;
dans laquelle les sulfates d'alkyle sont de formule (I) : 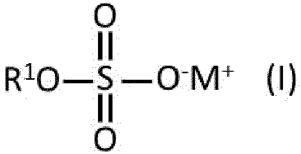
dans laquelle R¹ est un alkyle linéaire en C8 à 12 ; et
M⁺ est un cation monovalent.
et
- entre 1,0 % en poids et 5,0 % en poids d'un ou plusieurs oxydes d'amine, ledit ou lesdits oxydes d'amine sont de formule (III) : 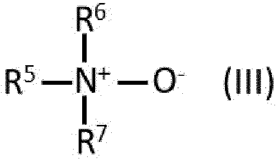
dans laquelle R⁵ est un alkyle en C_{6 à 16} ; et
R⁶ et R⁷ sont indépendamment alkyle en C_{1 à 3} ou hydrogène.

10. Utilisation d'une composition d'agent moussant consistant en :
- 95 % en poids à 99 % en poids d'un ou plusieurs agents moussants choisis parmi la liste constituée de sulfate d'alkyle
dans laquelle les sulfates d'alkyle sont de formule (I) : 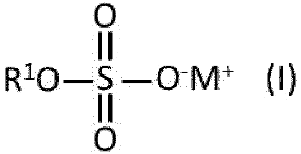
dans laquelle R¹ est un alkyle linéaire en C8 à 12 ; et
M⁺ est un cation monovalent.
; et
- 1 % en poids à 5 % en poids d'un ou plusieurs oxydes d'amine, ledit ou lesdits oxydes d'amine sont de formule (III) : 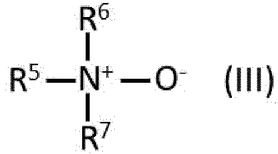
dans laquelle R⁵ est un alkyle en C_{6 à 16} ; et
R⁶ et R⁷ sont indépendamment alkyle en C_{1 à 3} ou hydrogène. ,
pour stabiliser la tête d'une barbotine dans la fabrication de plaque de plâtre.
